(19) Europäisches Patentamt
European Patent Office
Office européen des brevets

(11) Veröffentlichungsnummer: **0 129 129**
**A2**

(12) # EUROPÄISCHE PATENTANMELDUNG

(21) Anmeldenummer: 84106339.9

(22) Anmeldetag: 04.06.84

(51) Int. Cl.³: **C 09 B 67/48**
D 06 P 3/54
//C09B67/10, C09B29/085

(30) Priorität: 15.06.83 DE 3321527

(43) Veröffentlichungstag der Anmeldung:
27.12.84 Patentblatt 84/52

(84) Benannte Vertragsstaaten:
CH DE GB LI

(71) Anmelder: BAYER AG
Konzernverwaltung RP Patentabteilung
D-5090 Leverkusen 1 Bayerwerk(DE)

(72) Erfinder: Brandt, Horst, Dr.
Antoniusstrasse 4
D-5068 Odenthal(DE)

(72) Erfinder: Hamprecht, Rainer, Dr.
Im Kerberich 25
D-5068 Odenthal(DE)

(72) Erfinder: Otten, Hans-Günter, Dr.
Kurt-Schumacher-Ring 91a
D-5090 Leverkusen 1(DE)

(54) **Färbestabile Modifikation eines Azofarbstoffs.**

(57) Die neue kristallographische Modifikation des Farbstoffs der Formel

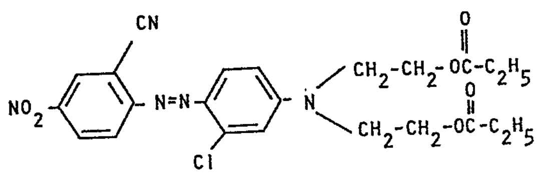

(I)

mit den Netzebenenabständen d/Å 9.98, 4.81, 4.25, 3.71 und 3.62 der fünf stärksten Linien mit den relativen Intensitäten 70, 80, 80, 100 und 95 zeichnet sich durch eine sehr gute Färbebadstabilität aus. Man erhält sie durch Tempern der instabilen α-Modifikation.

EP 0 129 129 A2

Croydon Printing Company Ltd

BAYER AKTIENGESELLSCHAFT 5090 Leverkusen, Bayerwerk

Konzernverwaltung RP
Patentabteilung K/ABc

# Färbestabile Modifikation eines Azofarbstoffs

Gegenstand der Erfindung ist die färbestabile ß-Modifikation des Azofarbstoffs der Formel

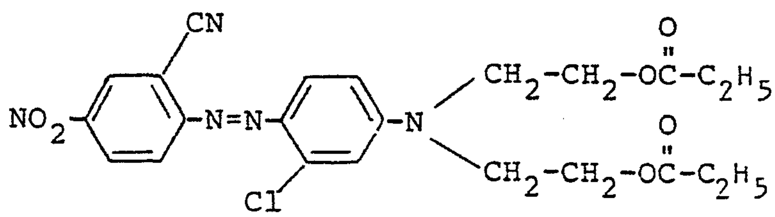

(I)

mit den Netzebenenabständen d/Å 9.98, 4.81, 4.25, 3.71 und 3.62 der fünf stärksten Linien mit den relativen Intensitäten 70, 80, 80, 100 und 95.

Die angegebenen Intensitäten werden repräsentativ aus dem in Fig. 1 beigefügten DEBYE-SCHERRER-Diagramm entnommen. (Wellenlänge $\lambda$ = 1.5418 A der Cu-K$\alpha$-Strahlung).

Der Farbstoff der angegebnen Formel ist als solcher bekannt (vgl. GB-A 852 493 und JP-A 55-16945).

Bei der in dieser Literatur beschriebenen Synthese

durch Diazotieren und Kupplung fällt der Farbstoff jedoch in einer bei 130°C schmelzenden α-Modifikation mit den Netzebenenanständen d/Å 15.72, 7.54, 5.5, 3.4 und 3.14 mit den relativen Indensitäten 80, 25, 30, 100 und 60 an (Fig. 2).

Die neue ß-Modifikation (Schmelzpunkt 154°C) erhält man durch Tempern, d.h. durch Aufschmelzen der α-Modifikation, oder auch durch deren thermische Behandlung in wäßriger Suspension in Gegenwart geringer Mengen (0,5 % bis 5 % bezogen auf die Farbstoffmasse) eines nichtionogenen Emulgators.

Darüber hinaus kann die ß-Modifikation auch durch Umkristallisieren aus geeigneten Lösungsmitteln, wie n-Hexanol oder Toluol, gewonnen werden.

Diese Modifikation, mit den üblichen anionischen Dispergiermitteln wie Ligninsulfonsäuren oder Kondensationsprodukten aus Naphthalin, Formaldehyd und Schwefelsäure formiert, ergibt tiefe egale Färbungen unter HT- und Carrierbedingungen, während die α-Modifikation im Färbebad instabil ist und zur Abfiltration neigt.

Beispiel 1

400 g eines 33 %igen Preßkuchens der $\alpha$-Modifikation werden mit 2,6 g eines handelsüblichen nichtionogenen Emulgators in 250 $cm^3$ Wasser zu einer Suspension vereinigt und nach Zusatz eines Entschäumers 1 bis 2 Std. am Rückfluß erhitzt. Danach wird der Farbstoff abgesaugt und der Nutschkuchen mit 117 g eines Ligninsulfonates versetzt. Die entstandene ß-Modifikation wird in eine Perlmühle gegeben, wo der Farbstoff auf eine Teilchengröße von $<$ 5 µm zerkleinert wird. Anschließend wird die dabei erhaltene Suspension in einem Zerstäubungstrockner getrocknet.

Beispiel 2

Eine Mischung aus 150 g eines 33 %igen Preßkuchens der $\alpha$-Modifikation und 1000 $cm^3$ n-Hexanol wird auf Siedetemperatur erhitzt, bis sich der Farbstoff vollständig gelöst hat. Aus der Lösung fällt beim Abkühlen der Farbstoff in der ß-Modifikation nahezu quantitativ aus. Der abfiltrierte und getrocknete Farbstoff wird mit 45 g eines Ligninsulfonates und 250 $cm^3$ Wasser angeschlagen, in einer Perlmühle zerkleinert und getrocknet.

Beispiel 3

150 g des 33 %igen bei der Farbstoffsynthese anfallenden Preßkuchens werden in 500 $cm^3$ Toluol durch

leichtes Erwärmen vollständig gelöst. Danach wird die Lösung auf etwa 100 $cm^3$ Wasser gegeben und der Farbstoff in der ß-Modifikation ausgefällt. Nach dem Trocknen wird dieser mit einer 30 %igen Lösung eines Kondensationsproduktes aus Naphthalin, Formaldehyd und Schwefelsäure redispergiert, zerkleinert, wie in Beispiel 1 angegeben und getrocknet.

Patentansprüche

1. Färbestabile Modifikation des Azofarbstoffs der Formel

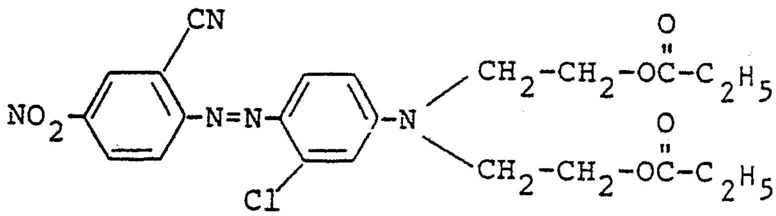

gekennzeichnet durch die Netzebenenabstände d/Å 9.98, 4.81, 4.25, 3.71 und 3.62 der fünf stärksten Linien mit den relativen Intensitäten 70, 80, 80, 100 und 95.

2. Verfahren zur Herstellung der Farbstoffmodifikation gemäß Anspruch 1, dadurch gekennzeichnet, daß man die entsprechende $\alpha$-Modifikation mit den Netzebenenabständen d/Å 15.72, 7.54, 5.5, 3.4 und 3.14 mit den relativen Intensitäten 80, 25, 30, 100 und 60 tempert.

3. Verfahren zum Färben von Polyesterfasern, dadurch gekennzeichnet, daß man die kristallographische Modifikation des Farbstoffs gemäß Anspruch 1 einsetzt.

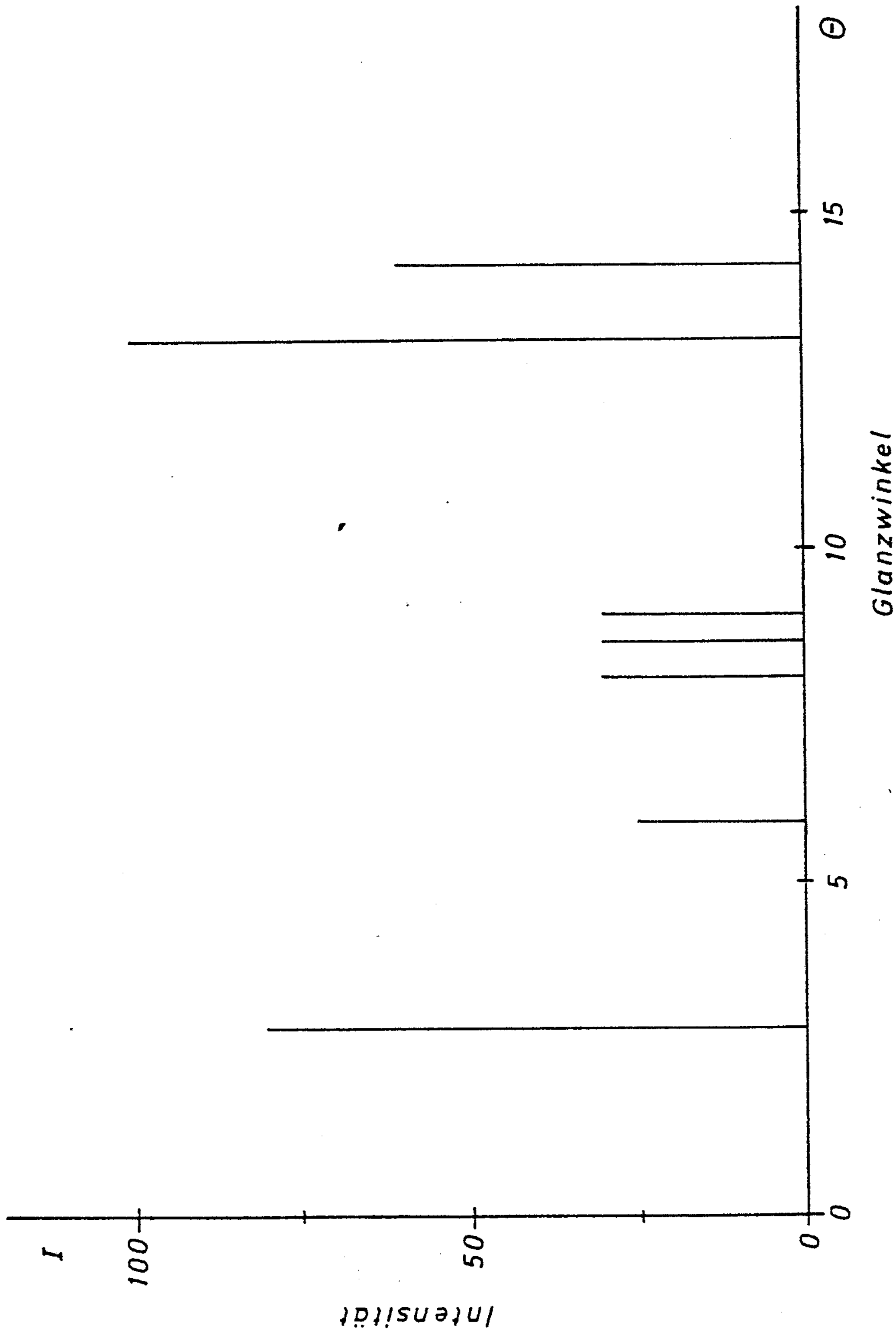


FIG. 1

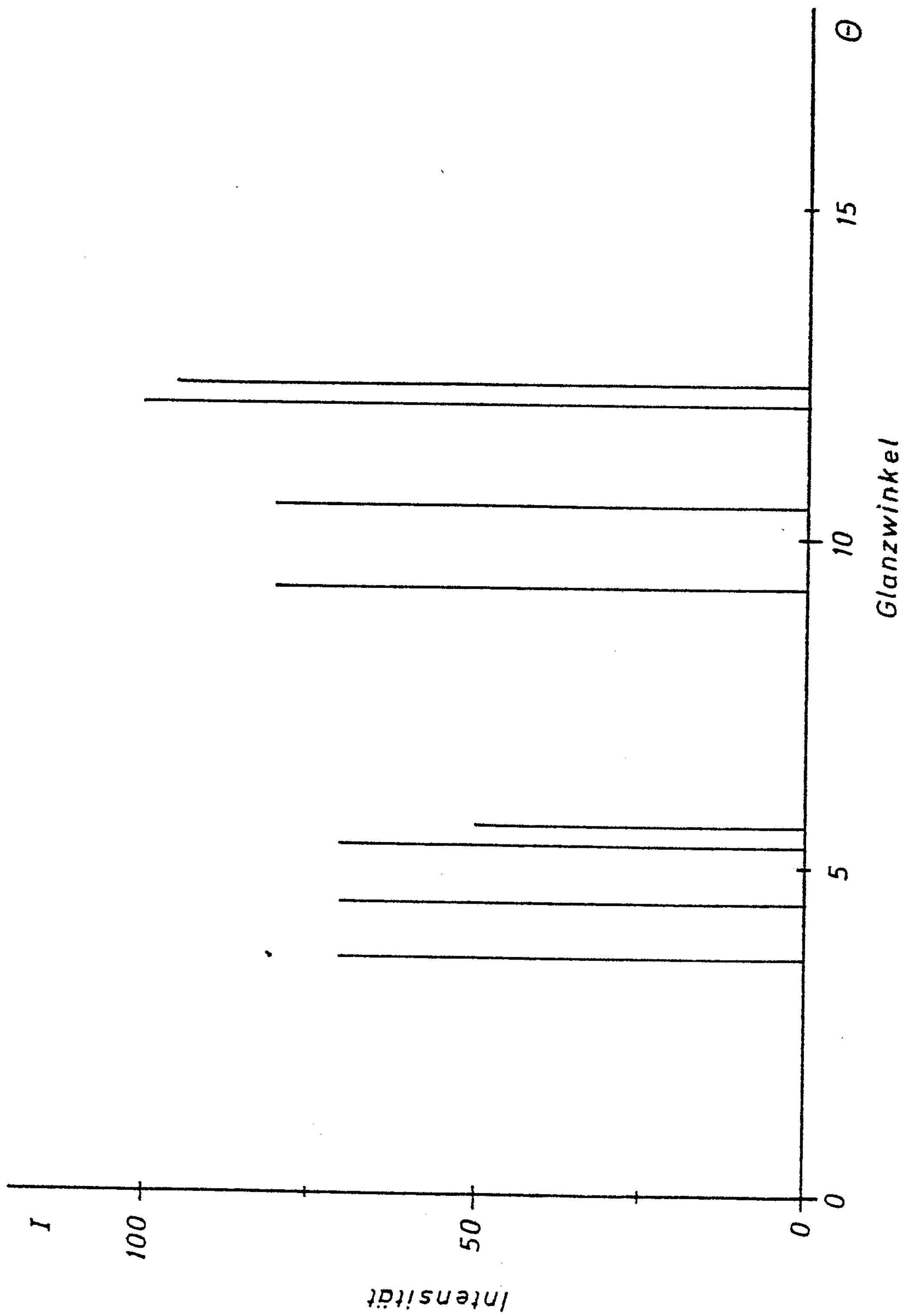


FIG. 2